(19) **Europäisches Patentamt / European Patent Office / Office européen des brevets**

(11) **EP 4 147 976 B1**

(12) **EUROPEAN PATENT SPECIFICATION**

(45) Date of publication and mention
of the grant of the patent:
**22.01.2025 Bulletin 2025/04**

(21) Application number: **22195058.7**

(22) Date of filing: **12.09.2022**

(51) International Patent Classification (IPC):
***B64D 27/02*** (2006.01)      ***B64U 50/11*** (2023.01)
***B64U 50/19*** (2023.01)

(52) Cooperative Patent Classification (CPC):
**B64D 27/02; B64U 50/11; B64U 50/19;** Y02T 10/62;
Y02T 50/60

(54) **POWER SYSTEM, POWER SYSTEM CONTROL METHOD, UAV AND UAV CONTROL METHOD**

STROMVERSORGUNGSSYSTEM, STROMVERSORGUNGSSYSTEMSTEUERUNGSVERFAHREN, UAV UND UAV-STEUERUNGSVERFAHREN

SYSTÈME D'ALIMENTATION, PROCÉDÉ DE COMMANDE DE SYSTÈME D'ALIMENTATION, UAV ET PROCÉDÉ DE COMMANDE UAV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2021 CN 202111073126**

(43) Date of publication of application:
**15.03.2023 Bulletin 2023/11**

(73) Proprietor: **Shanghai Autoflight Co., Ltd.**
**Jinshan District**
**Shanghai**
**201500 (CN)**

(72) Inventor: **YU, Tian**
**Shanghai, 201500 (CN)**

(74) Representative: **MERH-IP Matias Erny Reichl Hoffmann**
**Patentanwälte PartG mbB**
**Paul-Heyse-Straße 29**
**80336 München (DE)**

(56) References cited:
| | |
|---|---|
| EP-A1- 3 403 933 | WO-A1-2020/079369 |
| CN-A- 109 383 784 | CN-U- 212 501 058 |
| US-A1- 2014 010 652 | US-A1- 2018 115 265 |
| US-A1- 2018 354 635 | |

## Description

## Technical Field

The invention relates to the field of power output technology, in particular to a power system, a power system control method, a UAV and a UAV control method.

## Background Art

With the vigorous development of UAV industry, the UAV have been available in more types and applied in more areas. For the large and medium-sized fixed wing or compound wing UAVs whose main mission is cruise, mapping and logistics transportation, their endurance and mileage are of particular importance.

The power system of the existing UAV mostly adopts the following two power output modes: first, the built-in engine unit, which relies on the engine to drive the generator to generate electricity, and then the battery stores the electricity and supplies it to the electric motor to drive the propeller; second, the engine directly acts as the power source of the UAV, and provides power by directly driving the propeller. The first power output mode has high reliability. Even if the engine shut down, it will not affect the flight safety of the UAV. However, the power system occupies a large space, so the heat dissipation of the engine needs to be considered, and the energy utilization rate is extremely low due to multiple energy transformations. Although the second power output mode has simple structure and high energy utilization, it has no power output redundancy. Once the engine stops, the power source will be lost, affecting flight safety. Moreover, the endurance mileage of the UAV is limited by the mounted battery, which is used to power other equipment of the UAV. In case of low battery, it needs to return. US 2014/ 010 652 A1 relates to a hybrid powertrain for an aircraft, which may include a drive shaft, an internal combustion engine to selectably drive the drive shaft, a propeller coupled to the drive shaft, and an electric motor having a stator and a rotor and operable to selectably drive the drive shaft. US 2018/ 354 635 A1 relates to a hybrid electric propulsion system, which includes a gas turbine engine and an electric machine coupled to the gas turbine engine. CN 109 383 784 A relates to an aerial platform provided with a power-assisting system. WO 2020/ 079 369 A1 relates to an engine provided with a powertrain, which comprises a heat engine and an output shaft, an electric motor, a battery, and a propeller propulsion system comprising a propeller and a propeller shaft. EP 3 403 933 A1 relates to a method of operating a hybrid-electric propulsion system for an aircraft. US 2018/ 115 265 A1 relates to a system, which includes a torque sensor and a hybrid power system, which includes a frame, an engine mounted on the frame, and a generator. CN 212 501 058 U relates to a high-speed hybrid power UAV.

Therefore, the existing technology needs to be improved urgently.

## Summary of the Invention

The invention aims to provide a UAV and a UAV control method, which can ensure high energy utilization and realize power redundancy, significantly improve the flight safety of UAV, and ensure sufficient endurance and mileage.

To achieve the above purpose, the following technical scheme is provided:
The invention provides a UAV, having the features defined in claim 1.

The invention also provides a UAV control method for the UAV, having the features defined in claim 5. Further preferred embodiments are defined in the dependent claims.

Compared with the prior art, the invention has the following beneficial effects: the power system described in the 1st example helpful in understanding the invention sets the rotor of the motor, the external power receiver and the engine output shaft to be coaxially connected, and the motor can be used as a generator to do negative work on the engine output shaft to charge the battery, or as a motor, that is, to receive the power of the battery, do positive work on the engine output shaft to realize power output. The power system control method described in the 2nd example helpful in understanding the invention makes full use of the structural arrangement of the power system and determines the specific operation mode according to different working conditions of the engine. When the above power system is arranged on the above UAV, it can enable the UAV to have high energy utilization and power redundancy, thus significantly improving flight safety and ensuring sufficient endurance time and mileage.

Brief Description of the Figures

Fig. 1 is a side view of part structure of a power system in an example helpful in understanding of the invention;
Fig. 2 is the schematic diagram of the breakdown structure of Fig. 1;
Fig.3 is a flowchart of a power system control method in an example helpful in understanding of the invention;
Fig. 4 is a side view of part structure of a UAV in an embodiment of the invention;
Fig. 5 is the schematic diagram of the breakdown structure of Fig. 4.

Figure reference signs: 10. Propeller; 20. Engine; 21. Engine body; 22. Engine output shaft; 30. Motor; 31. Stator; 32. Rotor; 33. Stator connector.

## Detailed Description

In order to clarify the purpose, technical scheme, and advantages of the embodiments of the invention, the technical scheme in the embodiments of the invention will be described clearly and completely below in combination with the figures in the embodiments of the invention. Obviously, the described embodiments are part of the embodiments of the invention, not all of them. The components of the embodiments of the present invention, which are generally described and shown in the figures herein, may be arranged and designed in various types of different configurations. Therefore, the following detailed description of the embodiments of the invention provided in the accompanying drawings is not intended to limit the scope of the invention claimed, but only represents selected embodiments of the invention. Based on the embodiments of the invention, all other embodiments obtained by those skilled in the art without creative work fall within the breadth and scope of the invention.

It should be noted that similar labels and letters indicate similar items in the following figures.

Therefore, once an item is defined in a figure, it does not need to be further defined and explained in subsequent figures.

In the description of the invention, it should be noted that the orientation or position relationship indicated by the terms "up", "down", "left", "right", "vertical", "horizontal", "inside", "outside" is based on the orientation or position relationship shown in the figures, or the orientation or position relationship that the product of the invention is customarily placed when it is used, only for the convenience of describing the invention and simplifying the description, rather than indicating or implying that the device or element referred to must have a specific orientation, be constructed and operated in a specific orientation, it cannot be understood as a limitation of the invention. In addition, the terms "first", "second", "third" and the like are only used to distinguish descriptions, and cannot be understood as indicating or implying relative importance. In the description of the invention, unless otherwise specified, "multiple" means two or more.

In the description of the invention, it should also be noted that, unless otherwise expressly specified and limited, the terms "arranged" and "connection" should be understood in a broad sense, for example, it can be fixedly connected, a detachably connected, or integrated. It can be mechanical connection or electrical connection. For those skilled in the art, the specific meaning of the above terms in the invention may be understood in specific circumstances.

In the description of the invention, unless otherwise clearly specified and limited, the first feature "on" or "under" the second feature may include the direct contact between the first and second features, or the contact between the first and second features that is not direct contact, but through another feature between them.

Moreover, the first feature "on", "over", and "above" the second feature may include the first feature directly above and obliquely above the second feature, or only indicates that the horizontal height of the first feature is higher than the second feature. The first feature "under", "below" and "beneath" the second feature, may include the first feature directly below and obliquely below the second feature, or only indicate that the horizontal height of the first feature is smaller than that of the second feature.

The following describes in detail the embodiments of the invention, examples of which are shown in the figures, in which the same or similar labels throughout represent the same or similar elements or elements with the same or similar functions. The embodiments described below with reference to the figures are exemplary and are only for the purpose of explaining the invention and cannot be understood as limitations of the invention.

First example helpful in understanding the invention

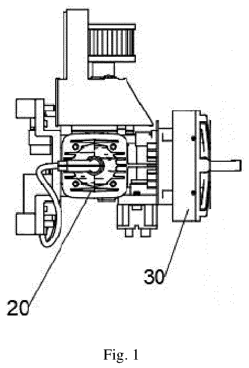

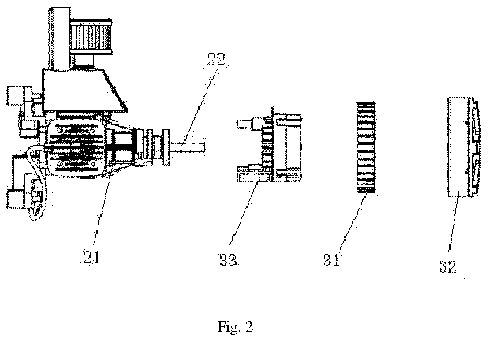

The example helpful in understanding the invention aims to provide a power system for outputting power. Upon the specific implementation, the power system can be mounted to the UAV, the ship, or other mechanical equipment that needs to be equipped with the power system to realize the power drive of the corresponding mechanical equipment. Specifically, as shown in Figs. 1 and 2, the power system includes an engine 20, a motor 30, and a battery. Specifically, the engine 20 includes an engine body 21 and an engine output shaft 22 arranged on the engine body 21, and the engine body 21 is installed on the body of the corresponding mechanical equipment. The motor 30 includes a stator 31, a rotor 32 and a stator connector 33 for connecting the stator 31 and the rotor 32. Upon the specific implementation, the stator connector 33 is arranged on the engine body 21 to realize the stable arrangement of the motor 30. The rotor 32 is coaxially arranged on the engine output shaft 22. The rotor 32 is also used for coaxial connection with the external power receiver, that is, the rotor 32, the external power receiver and the engine output shaft 22 are coaxially connected. The motor 30 in this example helpful in understanding the invention may be used as either a generator or an electric motor. When the motor 30 is used as an electric motor, the rotor 32 of the motor 30 does positive work on the engine output shaft 22, converting electrical energy into mechanical energy, which can assist the engine 20 for power output. When the motor 30 is used as a generator, the electronic rotor 32 does negative work on the engine output shaft 22, absorbs the output power of the engine 20, converts mechanical energy into electrical energy, and realizes the power generation operation. The battery is connected to the motor 30, so that when the motor 30 is used as an electric motor, the battery discharges to provide electric energy to the motor 30. When the motor 30 is used as a generator, it can receive the electric energy output by the motor 30 for charging. Upon the specific implementation, a two-stroke engine may be selected for the engine 20. The two-stroke engine is an engine that completes a working cycle between two strokes. It has no valve, which can greatly simplify the structure, reduce its own weight, and can be more conveniently and flexibly installed on mechanical equipment, reducing the weight of the whole mechanical equipment, thereby reducing energy consumption. Alternatively, the motor 30 is a permanent magnet synchronous motor or a permanent magnet asynchronous motor. Among them, the permanent magnet synchronous motor matches well with the two-stroke engine, and there is no conversion mechanism, so there is no conversion loss. The permanent magnet synchronous motor and two-stroke engine can work alone or together without clutch.

In order to facilitate the control over the working state of the engine 20 and the motor 30 of the power system, the power system also includes an engine controller and a motor controller. The engine controller is used to receive the control commands and output the execution signals to the engine 20, so as to control the working state of the engine 20. The motor controller is used to receive the control commands and output the execution signals to the motor 30, so as to control the working state of the motor 30. Further, the power system also includes a control board, which is used to send control commands to the engine controller or motor controller. Of course, the battery can supply power to the control board, engine controller and motor controller to ensure the smooth operation of the control system.

The power system in this example helpful in understanding the invention sets the rotor 32 of the motor 30, the external power receiver and the engine output shaft 22 to be coaxially connected, and the motor 30 can be used as a generator to charge the battery by doing negative work on the engine output shaft 22, or as an electric motor, that is, to receive the power of the battery and do positive work on the engine output shaft 22 to realize power output.

Second example helpful in understanding the invention

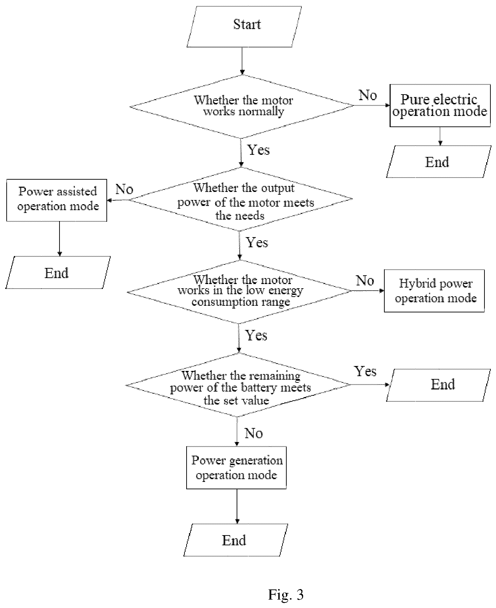

Based on the 1st example helpful in understanding the invention, this example helpful in understanding the invention provides a power system control method for the above power system, which provides the determination process of different operation modes of the power system. Referring to Fig. 3, specifically, the power system control method includes the following steps:

S10: Determine whether the engine 20 could work. If not, the power system enters the pure electric operation mode, in which the battery discharges to provide electric energy to the motor 30, and then the motor 30 provides power. Otherwise, go to the next step;
S20: If the engine 20 can work, determine whether the output power of the engine 20 meets the needs. If not, the power system enters the power assisted operation mode, in which the engine 20 and the motor 30 provide power at the same time. Otherwise, proceed to the next step;
S30: If the output power of the engine 20 meets the needs, determine whether the engine 20 works in the low energy consumption range. If not, the power system enters the hybrid operation mode, in which the engine 20 and the motor 30 provide power at the same time, and the engine 20 operates in the low energy consumption range.

In the step S10, determine the operation state of the engine 20 firstly. Only by ensuring that the engine 20 can work, then assign the work allocation between the engine 20 and the motor 30 reasonably according to the requirement. If the engine 20 cannot work directly, it can only enter the pure electric operation mode, in which the battery provides power, and the motor 30 is used as an electric motor. Specifically, in the step S10, the circumstances under which the engine 20 cannot work normally include but are not limited to the following: the fuel of the engine 20 is running out, the fuel injection nozzle of the engine 20 fails, and the engine 20 loses the rotation signal. Of course, upon the specific implementation, one or more of the above circumstances may occur to the engine 20. As long as any of the above circumstances occurs, it can be determined that the engine 20 cannot work normally.

In the step S20, in the power assisted operation mode, the engine 20 outputs the maximum power. Upon the specific implementation, if the engine 20 can work normally, the engine 20 is generally used as the main power output. In such case, it is necessary to determine whether the output power of the engine 20 meets the needs in the step S20. If the output power of the engine 20 does not meet the needs and enters the power assisted operation mode at this time, it is necessary to ensure that in this operation mode, the engine 20, which is the main power output, can output maximum power. On the premise that the output power of the engine 20 meets the needs, proceed to the step S30, that is, determine whether the engine 20 works in the low energy consumption range at that time, because although the output power of the engine 20 meets the use requirements, it is not necessarily the optimal output power rate from the perspective of energy consumption. If it is in the non-low energy consumption range, the motor 30 is required to participate in providing power, which is the hybrid operation mode. In the hybrid operation mode, the system will reduce the output power of the engine 20 as much as possible to make it work in the low energy consumption range, while increasing the output power of the motor 30, it can also ensure the normal operation of mechanical equipment.

Further, the power system control method also includes a step set after the step S30:

S40: If the engine 20 works in the low energy consumption range, determine whether the remaining power of the battery meets the set value. If not, the power system enters the power generation operation mode, in which the output power part of the engine 20 is received by the motor 30 for charging.

That is, in the step S30, if the engine 20 has operated in the low energy consumption range, there is no need for the motor 30 to provide additional power. In such case, it can be considered to use the engine 20 to charge the battery, so it is necessary to determine the remaining battery power firstly. When the remaining power of the battery does not meet the set value, on the premise of ensuring the low energy consumption of the engine 20 as much as possible, the output power of the engine 20 can be appropriately increased, so that part of the output power of the engine 20 can be received by the motor 30 for charging operation, so as to ensure that the battery has sufficient power, and also ensure the normal operation of other electrical equipment. At the same time, the battery has enough power storage when entering the power assisted operation mode or hybrid operation mode subsequently. Specifically, in this example helpful in understanding the invention, the set value of the remaining power of the battery is set to 80% of the full power.

The power system control method provided in this example helpful in understanding the invention makes full use of the structural arrangement of the power system in the 1st example helpful in understanding the invention, and determines the specific operation mode according to the different operation conditions of the engine 20, which can achieve power redundancy while ensuring high energy utilization.

Embodiment 1

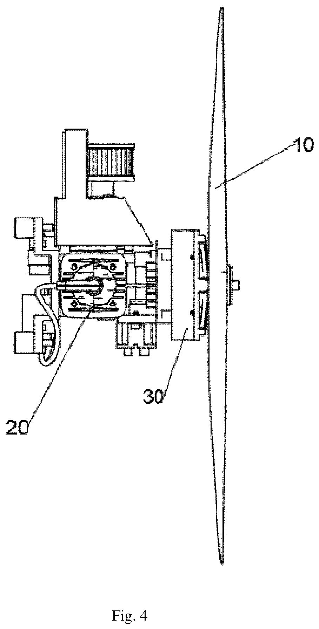

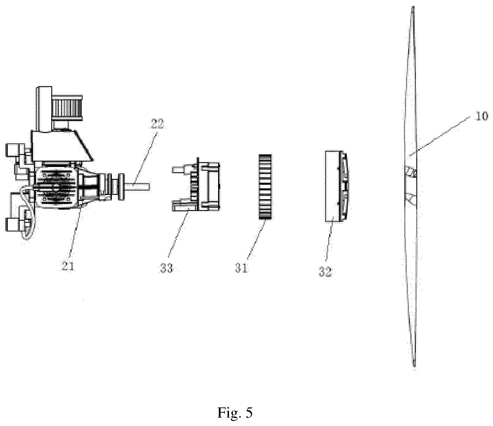

Based on the 1st example helpful in understanding the invention, this embodiment provides a UAV. Referring to Figs. 4 and 5, the UAV includes the power system described in the 1st example helpful in understanding the invention. Further, the UAV also includes an UAV body and a propeller 10 arranged on the UAV body.

Specifically, the engine body 21 is arranged on the UAV body to realize the stable placement of the engine 20 on the UAV, and the propeller 10 is coaxially arranged on the rotor 32 as an external power receiver. Specifically, the propeller 10 is directly locked on the rotor 32 by fasteners. Further, the battery of the power system is not only connected to the motor 30, but also connected to other equipment on the UAV that needs power supply, so as to ensure the normal operation of the whole UAV. The control board of the power system is used to control the whole UAV overall, send corresponding control signals to the engine controller and motor controller according to the ground control signals or the UAV's own needs, and then the engine controller and motor controller control the operation of the engine 20 and the motor 30, respectively.

This embodiment also provides a UAV control method, which can be used in the above UAV. Since the above UAV includes the power system in the 1st example helpful in understanding the invention, the UAV control method provided in this embodiment naturally also includes the power system control method in the 2nd example helpful in understanding the invention, that is, the power system control method in the 2nd example helpful in understanding the invention is applied to the UAV with this power system, so that the UAV has pure electric operation mode, power assisted operation mode, hybrid operation mode and power generation operation mode.

The conventional UAV built-in generator set generates electric energy by driving the motor with a two-stroke engine. The chemical energy of the fuel needs to be converted into mechanical energy, which is converted into electrical energy through the engine. After the electrical energy finally returns to the battery, it also needs to be converted into mechanical energy to provide power for the UAV. The energy conversion efficiency of the engine itself is only 30%, the conversion efficiency through the generator is 84%, and the conversion efficiency of electric energy into shaft power is 90%. The above conversion efficiency is the ideal average value. During this period, the low conversion efficiency and many conversion times result in extremely low energy utilization rate. Therefore, based on the above defects, the UAV of this embodiment adopts the power system in the 1st example helpful in understanding the invention, omits the clutch, and connects the engine 20, the motor 30 and the propeller 10 coaxially. At the same time, the UAV control system adopts the power system control method in the 2nd example helpful in understanding the invention. Therefore, when the above power system is mounted to the UAV, it can make the UAV have high energy utilization and power redundancy, and significantly improve flight safety. Specifically, the step S10 provides the pure electric operation mode of the power system to ensure that when the extreme situation of engine 20 failure occurs, the UAV can return to the return point or midway forced landing point to ensure the safety of the UAV. In the step S20, for the UAV, a flying vehicle, the output power of the engine 20 is easily affected by altitude. In some operation environments, the maximum power output of the engine 20 is limited and may not meet the use needs of the UAV. In such case, it may enter the power assisted operation mode, in which the motor 30 assists to provide power to ensure that the overall output power of the system meets the requirements, so as to improve the speed of the UAV. For another example, when the UAV needs to fly at full speed or climb, even if the maximum power output of the engine 20 still cannot meet the requirements, it also needs to enter the power assisted operation mode to improve the climbing performance and speed of the UAV. Moreover, on the premise of keeping the level flight power output of the UAV unchanged, the output power of the engine 20 can be increased, and the motor 30 converts this part of the extra power into electrical energy for storage. Therefore, after the UAV is equipped with the above power system, it not only provides the UAV structure with high energy utilization and power redundancy, but also significantly improves flight safety and ensures sufficient endurance and mileage.

Of course, in some other examples helpful in understanding the invention, the above power system and power system control method may also be used on other mechanical equipment other than UAV to help the corresponding mechanical equipment achieve high energy utilization and power redundancy. For example, the above power system may be applied to the ship, and the propeller of the ship may be used as the external power receiver. The specific example helpful in understanding the invention is similar to that of the UAV, which will not be repeated here.

Embodiment 2

Based on the UAV and UAV control method provided in Embodiment 1, this embodiment establishes the mathematical model of the power system for UAV, and illustrates several operation modes of UAV through the mathematical model, so as to facilitate the understanding of multiple operation modes and application scenarios of UAV control method.

Specifically, the mathematical model of the power system of UAV is:

$$P_{engine} + P_{motor} + P_{battery\text{-}in} = P_{propeller}$$

Where, $P_{engine}$ is the engine's shaft power; $P_{motor}$ is the shaft power of the motor; $P_{propeller}$ is the propeller's power; $P_{battery\text{-}in}$ is the input power of the battery.

Example 1: Hybrid power operation mode

Since the fuel consumption curve of the engine 20 is known, it is assume that the fuel consumption rate of the engine 20 is 684g/kw.h under the output power is 2200w at 5500rpm and 80% throttle opening; and the fuel consumption rate is 540g/kw.h under the output power is 2000w at 5500rpm and 60% throttle opening; then through the following calculation:

$$1 - (540 \div 684) \approx 0.21052$$

$$1 - (2000 \div 2200) \approx 0.10$$

the fuel consumption rate is reduced by 21%, while the power is reduced by only 10%. Therefore, in this operation mode, the reduction of throttle opening of the engine 20 can be controlled, and then the increase of the output power of the motor 30 can be controlled, so that the engine 20 may not work in the low energy efficiency range. The specific values of each parameter can be: $P_{engine}$= 2000w, $P_{motor}$= 200w, $P_{propeller}$= 2200w; $P_{battery\text{-}in}$ = 0w.

Example 2: Power assisted operation mode

When the UAV needs to fly at full speed or climb, the output power of the engine 20 alone may not meet the demand, so the intervention of the motor 30 is required. If the UAV cruises at 140km/h, it needs the shaft power output of 5000w to reach the corresponding thrust, and the maximum engine shaft power is 3000W, the specific values of various parameters can be: $P_{engine}$= 3000w, $P_{motor}$= 2000w, $P_{propeller}$= 5000w; $P_{battery\text{-}in}$ = 0w.

Example 3: Power generation mode

When the UAV is cruising at the speed of 120km/h, only the shaft power output of 1500w is required, and the engine 20 can meet low energy consumption according to this power output. In order to meet the normal use of the battery of the UAV, the engine 20 will be controlled to output the power of 2000w, and the excess 500w power will be absorbed by the motor 30 and fed back to the battery to charge the battery. The specific values of each parameter can be: $P_{engine}$= 2000w, $P_{motor}$= -500w, $P_{propeller}$= 1500w; $P_{battery\text{-}in}$ = 500w.

Example 4: Pure electric operation mode

Because the pure electric operation mode is only available when the engine 20 cannot work normally, that is, when the engine 20 fails, the UAV detects that the engine 20 has failed and needs to return immediately. In such case, the return power can only be provided by the motor 30.

Note that the above is only the preferred embodiments of the invention and the technical principle used. Those skilled in the art understands that the invention is not limited to the specific embodiments described here, and it is possible for those skilled in the art to make various obvious changes, readjustments, and substitutions without departing from the protection breadth of the invention as defined by the appended claims.

**Claims**

1. A UAV, which comprises a power system for outputting power,
   wherein the power system comprises:

   an engine (20), which comprises an engine body (21) and an engine output shaft (22) arranged on the engine body (21);
   a motor (30), which comprises a stator (31), a rotor (32) and a stator connector (33) for connecting the stator (31) and the rotor (32); the stator connector (33) is arranged on the engine body (21), and

the rotor (32) is coaxially arranged on the engine output shaft (22); the rotor (32) is used for coaxial connection with an external power receiver; and

a battery, which is connected to the motor (30), and the battery can discharge to provide electric energy to the motor (30), or receive the electric energy output by the motor (30) for charging, wherein the UAV further comprises a UAV body and a propeller (10) arranged on the UAV body, wherein the engine body (21) is arranged on the UAV body, and the propeller (10) is coaxially arranged on the rotor (32) as the external power receiver, and wherein

the propeller (10) is directly locked on the rotor (32) by fasteners.

2. The UAV according to claim 1, which is **characterized in that** the engine (20) is a two-stroke engine.

3. The UAV according to claim 1, which is **characterized in that** the motor (30) is a permanent magnet synchronous motor.

4. The UAV according to claim 1, which is **characterized in that** the power system further comprises:

    an engine controller for receiving control commands and outputting execution signals to the engine (20);
    a motor controller for receiving control commands and outputting execution signals to the motor (30).

5. A UAV control method for the UAV according to any one of claims 1-4, which is **characterized in that** it comprises the following steps:

    S10: Determine whether the engine (20) could work. If not, the power system enters the pure electric operation mode, in which the battery discharges to provide electric energy to the motor (30), which then provides power; otherwise, go to the next step;
    S20: If the engine (20) can work, determine whether the output power of the engine (20) meets the needs; if not, the power system enters the power assisted operation mode, in which the engine (20) and the motor (30) provide power at the same time; otherwise, proceed to the next step;
    S30: If the output power of the engine (20) meets the needs, determine whether the engine (20) works in the low energy consumption range; if not, the power system enters the hybrid operation mode, in which the engine (20) and the motor (30) provide power at the same time, and the engine (20) operates in the low energy consumption range.

6. The UAV control method according to claim 5, which is **characterized in that** after the step S30, the following steps are also included:

    S40: If the engine (20) works in the low energy consumption range, determine whether the remaining power of the battery meets the set value; if not, the power system enters the power generation operation mode, in which the output power of the engine (20) is partially received by the motor (30) for charging.

7. The UAV control method according to claim 6, which is **characterized in that** the set value of the remaining power of the battery is 80% of the full power.


**Patentansprüche**

1. UAV, das ein Leistungssystem zum Abgeben von Leistung umfasst,
   wobei das Leistungssystem Folgendes umfasst:

    einen Motor (20), der einen Motorkörper (21) und eine Motorabtriebswelle (22), die an dem Motorkörper (21) angeordnet ist, umfasst;
    einen Motor (30), der einen Stator (31), einen Rotor (32) und einen Statorverbinder (33) zum Verbinden des Stators (31) und des Rotors (32) umfasst; wobei der Statorverbinder (33) an dem Motorkörper (21) angeordnet ist und der Rotor (32) koaxial an der Motorabtriebswelle (22) angeordnet ist; wobei der Rotor (32) zur koaxialen Verbindung mit einem externen Leistungsempfänger verwendet wird; und
    eine Batterie, die mit dem Motor (30) verbunden ist, und wobei sich die Batterie entladen kann, um dem Motor (30) elektrische Energie bereitzustellen oder die elektrische Energie, die durch den Motor (30) zum Laden abgegeben wird, zu empfangen,
    wobei das UAV ferner einen UAV-Körper und einen Propeller (10), der an dem UAV-Körper angeordnet ist, umfasst,
    wobei der Motorkörper (21) an dem UAV-Körper angeordnet ist und der Propeller (10) koaxial an dem Rotor (32) als der externe Leistungsempfänger angeordnet ist, und wobei der Propeller (10) durch Befestigungsmittel direkt an dem Rotor (32) verriegelt ist.

2. UAV nach Anspruch 1, **dadurch gekennzeichnet, dass** der Motor (20) ein Zweitaktmotor ist.

**3.** UAV nach Anspruch 1, **dadurch gekennzeichnet, dass** der Motor (30) ein Permanentmagnet-Synchronmotor ist.

**4.** UAV nach Anspruch 1, **dadurch gekennzeichnet, dass** das Leistungssystem ferner Folgendes umfasst:

eine Motorsteuerung zum Empfangen von Steuerbefehlen und zum Abgeben von Ausführungssignalen an den Motor (20);
eine Motorsteuerung zum Empfangen von Steuerbefehlen und zum Abgeben von Ausführungssignalen an den Motor (30).

**5.** UAV-Steuerverfahren für das UAV nach einem der Ansprüche 1-4, **dadurch gekennzeichnet, dass** es die folgenden Schritte umfasst:

S10: Bestimmen, ob der Motor (20) arbeiten könnte. Wenn nicht, tritt das Leistungssystem in den reinen elektrischen Betriebsmodus ein, in dem sich die Batterie entlädt, um dem Motor (30) elektrische Energie bereitzustellen, der dann Leistung bereitstellt; andernfalls zum nächsten Schritt übergehen;
S20: Wenn der Motor (20) arbeiten kann, Bestimmen, ob die Ausgangsleistung des Motors (20) den Bedarf erfüllt; wenn nicht, tritt das Leistungssystem in den leistungsunterstützten Betriebsmodus ein, in dem der Motor (20) und der Motor (30) gleichzeitig Leistung bereitstellen; andernfalls zum nächsten Schritt übergehen;
S30: Wenn die Ausgangsleistung des Motors (20) den Bedarf erfüllt, Bestimmen, ob der Motor (20) im niedrigen Energieverbrauchsbereich arbeitet; wenn nicht, tritt das Leistungssystem in den Hybridbetriebsmodus ein, in dem der Motor (20) und der Motor (30) gleichzeitig Leistung bereitstellen und der Motor (20) im niedrigen Energieverbrauchsbereich arbeitet.

**6.** UAV-Steuerverfahren nach Anspruch 5, **dadurch gekennzeichnet, dass** nach dem Schritt S30 auch die folgenden Schritte enthalten sind:
S40: Wenn der Motor (20) im niedrigen Energieverbrauchsbereich arbeitet, Bestimmen, ob die Restleistung der Batterie den eingestellten Wert erfüllt, wenn nicht, tritt das Leistungssystem in den Leistungserzeugungsbetriebsmodus ein, in dem die Ausgangsleistung des Motors (20) teilweise durch den Motor (30) zum Laden empfangen wird.

**7.** UAV-Steuerverfahren nach Anspruch 6, **dadurch gekennzeichnet, dass** der eingestellte Wert der Restleistung der Batterie 80 % der vollen Leistung beträgt.

**Revendications**

**1.** UAV, qui comprend un système de puissance pour délivrer de la puissance,
dans lequel le système de puissance comprend :

un moteur (20), qui comprend un corps de moteur (21) et un arbre de sortie de moteur (22) agencé sur le corps de moteur (21) ;
un moteur (30), qui comprend un stator (31), un rotor (32) et un connecteur de stator (33) pour connecter le stator (31) et le rotor (32) ; le connecteur de stator (33) est agencé sur le corps de moteur (21), et le rotor (32) est agencé de manière coaxiale sur l'arbre de sortie de moteur (22) ; le rotor (32) est utilisé pour une connexion coaxiale avec un récepteur de puissance externe ; et
une batterie, qui est connectée au moteur (30), et la batterie peut se décharger pour fournir de l'énergie électrique au moteur (30), ou recevoir l'énergie électrique délivrée par le moteur (30) pour la charge,
dans lequel l'UAV comprend en outre un corps d'UAV et une hélice (10) agencée sur le corps d'UAV,
dans lequel le corps de moteur (21) est agencé sur le corps d'UAV, et l'hélice (10) est agencée de manière coaxiale sur le rotor (32) en tant que récepteur de puissance externe, et dans lequel l'hélice (10) est directement verrouillée sur le rotor (32) par des fixations.

**2.** UAV selon la revendication 1, qui est **caractérisé en ce que** le moteur (20) est un moteur à deux temps.

**3.** UAV selon la revendication 1, qui est **caractérisé en ce que** le moteur (30) est un moteur synchrone à aimant permanent.

**4.** UAV selon la revendication 1, qui est **caractérisé en ce que** le système de puissance comprend en outre :

un dispositif de commande de moteur pour recevoir des instructions de commande et délivrer des signaux d'exécution au moteur (20) ;
un dispositif de commande de moteur pour recevoir des instructions de commande et délivrer des signaux d'exécution au moteur (30).

**5.** Procédé de commande d'UAV pour l'UAV selon l'une quelconque des revendications 1 à 4, qui est **caractérisé en ce qu'**il comprend les étapes suivantes :

S10 : déterminer si le moteur (20) pourrait fonctionner. Sinon, le système de puissance entre dans le mode de fonctionnement électrique pur, dans lequel la batterie se décharge pour fournir de l'énergie électrique au moteur (30), qui fournit alors de la puissance ; sinon, passer à l'étape suivante ;

S20 : si le moteur (20) peut fonctionner, déterminer si la puissance de sortie du moteur (20) répond aux besoins ; sinon, le système de puissance entre dans le mode de fonctionnement assisté, dans lequel le moteur (20) et le moteur (30) fournissent de la puissance en même temps ; sinon, passer à l'étape suivante ;

S30 : si la puissance de sortie du moteur (20) répond aux besoins, déterminer si le moteur (20) fonctionne dans la plage de faible consommation d'énergie ; sinon, le système de puissance entre dans le mode de fonctionnement hybride, dans lequel le moteur (20) et le moteur (30) fournissent de la puissance en même temps, et le moteur (20) fonctionne dans la plage de faible consommation d'énergie.

6. Procédé de commande d'UAV selon la revendication 5, qui est **caractérisé en ce qu'**après l'étape 530, les étapes suivantes sont également incluses :

S40 : si le moteur (20) fonctionne dans la plage de faible consommation d'énergie, déterminer si la puissance restante de la batterie répond à la valeur de consigne, sinon, le système de puissance entre dans le mode de fonctionnement de génération de puissance, dans lequel la puissance de sortie du moteur (20) est partiellement reçue par le moteur (30) pour la charge.

7. Procédé de commande d'UAV selon la revendication 6, qui est **caractérisé en ce que** la valeur de consigne de la puissance restante de la batterie est de 80 % de la puissance totale.

Fig. 1

Fig. 2

Fig. 3

Fig. 4

Fig. 5

**EP 4 147 976 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014010652 A1
- US 2018354635 A1
- CN 109383784 A
- WO 2020079369 A1
- EP 3403933 A1
- US 2018115265 A1
- CN 212501058 U